# EUROPEAN PATENT APPLICATION

(11) **EP 2 587 779 A1**
(43) Date of publication of application: **01.05.2013**
(21) Application number: 11797751.2
(22) Date of filing: 20.04.2011
(51) Int. Cl.: H04M 11/00, H04W 8/26, H04W 76/02

(54) **MOBILE COMMUNICATIONS SYSTEM**

(30) Priority: 24.06.2010 JP 2010143457
(71) Applicant: NEC Corporation, Tokyo 108-8001 (JP)
(72) Inventor: SHIROSHIMA, Takahiro, Tokyo 108-8001 (JP)
(74) Representative: Vossius & Partner
(86) International application number: PCT/JP2011/002305
(87) International publication number: WO 2011/161862

(57) **Abstract**

A mobile communication system 100 includes: a plurality of relay servers 101 and 102 connected via a global IP network so as to be capable of communicating; a first mobile communication terminal 110 connected with the relay server 101 so as to be capable of communicating; a second mobile communication terminal 120 connected with the relay server 102 so as to be capable of communicating; and a message relay server 103 relaying transmission and reception of a message between the mobile communication terminals 110 and 120. The first mobile communication terminal transmits a message including global address information acquired from the relay server 101, to the second mobile communication terminal. The second mobile communication terminal requests the relay server 102 to establish a communication session between the mobile communication terminals 110 and 120 through the relay servers 101 and 102, based on the received global address information.

## Description

### TECHNICAL FIELD

The present invention relates to a mobile communication system in which data communication is performed between mobile communication terminals.

### BACKGROUND ART

A mobile communication system which includes mobile communication terminals (e.g., mobile phones) performing data communication via an IP (Internet Protocol) network in addition to speech communication for talk is known. A mobile communication system disclosed in Patent Document 1 as one of this type of mobile communication systems includes a first relay server, a second relay server, and a matching server.

A first mobile communication terminal is connected with the first relay server so as to be capable of communicating. Moreover, a second mobile communication terminal is connected with the second relay server so as to be capable of communication. The first relay server, the second relay server, and the matching server are connected with each other via a global IP network so as to be capable of communicating.

The first relay server transmits global address information associated with the first mobile communication terminal to the first mobile communication terminal. Global address information includes a global IP address and a port number. In the same manner, the second relay server transmits global address information associated with the second mobile communication terminal to the second mobile communication terminal.

The first mobile communication terminal transmits the global address information received from the first relay server, to the matching server. In the same manner, the second mobile communication terminal transmits the global address information received from the second relay server, to the matching server.

After that, the matching server transmits the global address information received from the first mobile communication terminal, to the second mobile communication terminal. Moreover, the matching server transmits the global address information received from the second mobile communication terminal, to the first mobile communication terminal.

Consequently, the first mobile communication terminal and the second mobile communication terminal can perform data communication with each other via the first relay server and the second relay server, based on the global address information received from the matching server. As a result, compared with when the respective mobile communication terminals are directly connected to a global IP network, it is possible to reduce a possibility of information leak from the mobile communication terminals to the outside.

[Patent Document 1] Japanese Unexamined Patent Application Publication No. 2009-253444

In the abovementioned mobile communication system, there is a need to arrange the matching server within the global IP network. Moreover, it takes time and effort to operate the matching server. In other words, there is a problem that it takes excessive cost to structure and operate the mobile communication system.

### SUMMARY

Accordingly, an object of the present invention is to provide a mobile communication system capable of solving the abovementioned problem, "it takes excessive cost to structure and operate the mobile communication system."

In order to achieve the object, a mobile communication system as an exemplary embodiment of the present invention includes:
a first relay server having a global IP address;
a second relay server having a global IP address and connected with the first relay server via a global IP network so as to be capable of communicating;
a first mobile communication terminal connected with the first relay server so as to be capable of communicating;
a second mobile communication terminal connected with the second relay server so as to be capable of communicating; and
a message relay server relaying transmission and reception of a message between the first mobile communication terminal and the second mobile communication terminal.
The first mobile communication terminal includes:
a global address information acquiring means for acquiring global address information which is information including the global IP address and which is information associated with the first mobile communication terminal, from the first relay server; and
a message transmitting means for transmitting the message including the acquired global address information to the second mobile communication terminal via the message relay server.
The second mobile communication terminal includes:
a message receiving means for receiving the message transmitted by the first mobile communication terminal; and
a communication establishment requesting means for, based on the global address information included in the received message, requesting the second relay server to establish a communication session between the first mobile communication terminal and the second mobile communication terminal through the first relay server and the second relay server.

Further, a mobile communication method as another exemplary embodiment of the present invention is a method applied to a mobile communication system which includes: a first relay server having a global IP address; a second relay server having a global IP address and connected with the first relay server via a global IP network so as to be capable of communicating; a first mobile communication terminal connected with the first relay server so as to be capable of communicating; a second mobile communication terminal connected with the second relay server so as to be capable of communicating; and a message relay server relaying transmission and reception of a message between the first mobile communication terminal and the second mobile communication terminal.
The mobile communication method includes:
by the first mobile communication terminal, acquiring global address information which is information including the global IP address and which is information associated with the first mobile communication terminal, from the first relay server;
by the first mobile communication terminal, transmitting the message including the acquired global address information to the second mobile communication terminal via the message relay server;
by the second mobile communication terminal, receiving the message transmitted by the first mobile communication terminal; and
by the second mobile communication terminal, requesting the second relay server to establish a communication session between the first mobile communication terminal and the second mobile communication terminal through the first relay server and the second relay server, based on the global address information included in the received message.

Further, a mobile communication terminal as another exemplary embodiment of the present invention is a mobile communication terminal connected with a relay server having a global IP address so as to be capable of communicating.

Moreover, this mobile communication terminal includes:
a global address information acquiring means for acquiring global address information which is information including the global IP address and which is information associated with the mobile communication terminal, from the relay server; and
a message transmitting means for transmitting a message including the acquired global address information to another mobile communication terminal via a message relay server.

Further, a mobile communication program as another exemplary embodiment of the present invention is a program including instructions for causing a mobile communication terminal connected with a relay server having a global IP address so as to be capable of communicating, to realize:
a global address information acquiring means for acquiring global address information which is information including the global IP address and which is information associated with the mobile communication terminal, from the relay server; and
a message transmitting means for transmitting a message including the acquired global address information to another mobile communication terminal via a message relay server.

Further, a mobile communication terminal as another exemplary embodiment of the present invention is a mobile communication terminal connected with a relay server having a global IP address so as to be capable of communicating.

Moreover, this mobile communication terminal includes:
a message receiving means for receiving a message which is transmitted by another mobile communication terminal and which includes global address information that is information including a global IP address, via a message relay server; and
a communication establishment requesting means for, based on the global address information included in the received message, requesting the relay server to establish a communication session with the other mobile communication terminal through the relay server.

A mobile communication program as another exemplary embodiment of the present invention is a program including instructions for causing a mobile communication terminal connected with a relay server having a global IP address so as to be capable of communicating, to realize:
a message receiving means for receiving a message which is transmitted by another mobile communication terminal and which includes global address information that is information including a global IP address, via a message relay server; and
a communication establishment requesting means for, based on the global address information included in the received message, requesting the relay server to establish a communication session between the mobile communication terminal and the other mobile communication terminal through the relay server.

With the configurations described above, the present invention can reduce the cost for structuring and operating.

### BRIEF DESCRIPTION OF DRAWINGS

Fig. 1 is a view schematically showing the configuration of a mobile communication system according to a first exemplary embodiment of the present invention;
Fig. 2 is a block diagram schematically showing a function of a mobile communication terminal in the first exemplary embodiment of the present invention;
Fig. 3 is a flowchart showing a communication processing program executed by a CPU of the mobile communication terminal in the first exemplary embodiment of the present invention;
Fig. 4 is a flowchart showing a message reception processing program executed by the CPU of the mobile communication terminal in the first exemplary embodiment of the present invention;
Fig. 5 is a block diagram schematically showing a function of a mobile communication terminal in a second exemplary embodiment of the present invention;
Fig. 6 is a flowchart showing a communication processing program executed by a CPU of the mobile communication terminal in the second exemplary embodiment of the present invention;
Fig. 7 is a flowchart showing a message reception processing program executed by the CPU of the mobile communication terminal in the second exemplary embodiment of the present invention; and
Fig. 8 is a block diagram schematically showing a function of a mobile communication system according to a third exemplary embodiment of the present invention.

### EXEMPLARY EMBODIMENTS

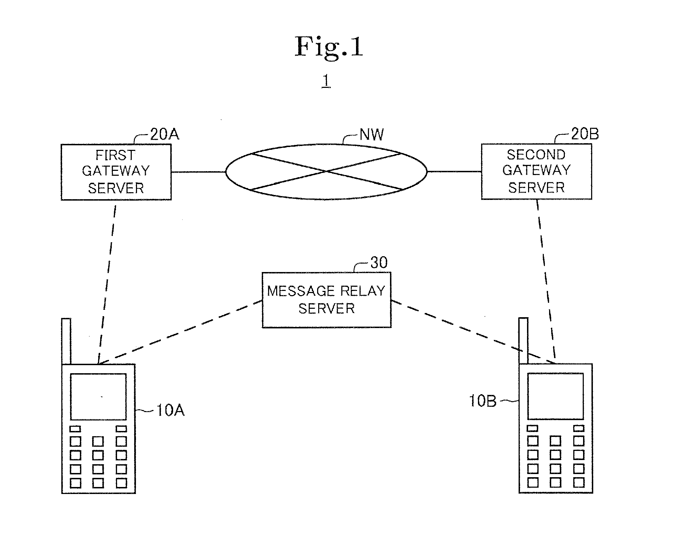

Below, the respective exemplary embodiments of a mobile communication system, a mobile communication method, a mobile communication terminal and a mobile communication program according to the present invention will be described with reference to Figs. 1 to 8.

### <First Exemplary Embodiment>

### (Configuration)

As shown in Fig. 1, a mobile communication system 1 according to a first exemplary embodiment includes a first mobile communication terminal 10A, a second mobile communication terminal 10B, a first gateway server (a first relay server) 20A, a second gateway server (a second relay server) 20B, and a message relay server 30.

The first gateway server 20A and the second gateway server 20B each include a central processing unit (CPU) and a storage device (a memory and a hard disk drive (HDD)), which are not shown in the drawings. Each of the gateway servers 20A and 20B is configured to realize a function described later by execution of a program stored in the storage device by the CPU.

The first gateway server 20A and the second gateway server 20B are connected with each other so as to be capable communicating via a communication network NW configuring a global IP (Internet Protocol) network. The gateway servers 20A and 20B have global IP addresses different from cach other, respectively.

Upon reception of an address information acquisition request from the first mobile communication terminal 10A, the first gateway server 20A generates global address information, and stores the generated global address information in association with the first mobile communication terminal 10A and also transmits to the first mobile communication terminal 10A.

An address information acquisition request is information on a request for transmission of global address information. Global address information is information including a global IP address and a port number. The first gateway server 20A relays data transmitted and received between the first mobile communication terminal 10A and the second mobile communication terminal 10B.

Upon reception of an address information acquisition request from the second mobile communication terminal 10B, the second gateway server 20B generates global address information, and stores the generated global address information in association with the second mobile communication terminal 10B and also transmits to the second mobile communication terminal 10B. The second gateway server 20B relays data transmitted and received between the first mobile communication terminal 10A and the second mobile communication terminal 10B.

The first mobile communication terminal 10A is configured to perform speech communication for talk with another mobile communication terminal (in this exemplary embodiment, the second mobile communication terminal 10B). Consequently, a user using the first mobile communication terminal 10A can talk with a user using another mobile communication terminal (in this exemplary embodiment, the second mobile communication terminal 10B).

Further, the first mobile communication terminal 10A is configured to perform data communication via an IP network with another mobile communication terminal (in this exemplary embodiment, the second mobile communication terminal 10B). Moreover, the first mobile communication terminal 10A is configured to perform transmission and reception of a message (exchange of a message) via the message relay server 30 with another mobile communication terminal (in this exemplary embodiment, the second mobile communication terminal 10B). In this exemplary embodiment, a message is a message transmitted as a short message in the short message service (SMS).

To be specific, the first mobile communication terminal 10A includes a CPU, a storage device (a memory), an input device (in this exemplary embodiment, a plurality of buttons (keys), a microphone, and so on), and an output device (in this exemplary embodiment, a display, a speaker, and so on), which are not shown in the drawings. The first mobile communication terminal 10A is configured to realize a function described later by execution of a program stored in the storage device by the CPU. The second mobile communication terminal 10B also has the same configuration as that of the first mobile communication terminal 10A.

In this exemplary embodiment, each of the mobile communication terminals 10A and 10B is a mobile phone. The first mobile communication terminal 10A is connected with the first gateway server 20A so as to be capable of communicating via a not-shown base station and a not-shown communication network configuring a private IP network. The second mobile communication terminal 10B is connected so as to be capable of communicating with the second gateway server 20B via a not-shown base station and a not-shown communication network configuring a private IP network.

The message relay server 30 includes a CPU and a storage device (a memory and HDD), which are not shown in the drawings. The message relay server 30 is configured to realize a function described later by execution of a program stored in the storage device by the CPU.

The message relay server 30 is connected so as to be capable of communicating with each of the first mobile communication terminal 10A and the second mobile communication terminal 10B via the not-shown base station. The message relay server 30 relays transmission and reception of a message between the first mobile communication terminal 10A and the second mobile communication terminal 10B.

To be specific, the message relay server 30 receives information including a message and a telephone number as a destination of the message, and transmits (transfers) the received message to the mobile communication terminal 10A or 10B specified by the received telephone number.

### (Function)

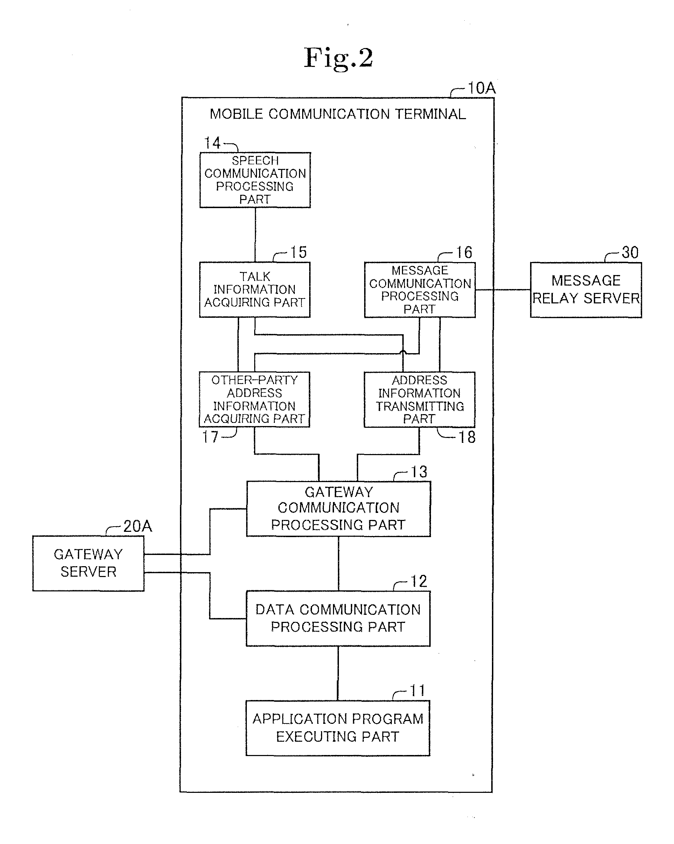

Fig. 2 is a block diagram showing a function of the first mobile communication terminal 10A of functions of the mobile communication system 1 configured as described above. The second mobile communication terminal 10B also has the same function as the first mobile communication terminal 10A.

The function of the first mobile communication terminal 10A includes an application program executing part 11, a data communication processing part 12, a gateway communication processing part (a global address information acquiring means, a communication establishment requiring means) 13, a speech communication processing part 14, a talk information acquiring part 15, a message communication processing part (part of a message transmitting means, a message receiving means) 16, an other-party address information acquiring part 17, and an address information transmitting part (part of the message transmitting means) 18.

The application program executing part 11 executes an application program stored in the storage device. The application program executing part 11 accepts input information inputted by the user via the input device.

Further, the application program executing part 11 outputs an instruction to perform data communication with another mobile communication terminal (in this exemplary embodiment, the second mobile communication terminal 10B), to the data communication processing part 12. In addition, the application program executing part 11 generates output information, and outputs the generated output information via the output device (e.g., causes the display to display an image).

The data communication processing part 12 performs data communication with another mobile communication terminal (in this exemplary embodiment, the second mobile communication terminal 10B) in response to an instruction from the application program executing part 11.

The gateway communication processing part 13 transmits an address information acquisition request to the first gateway server 20A. The gateway communication processing part 13 receives (acquires) global address information transmitted by the first gateway server 20A in response to an address information acquisition request.

The gateway communication processing part 13 transmits a communication establishment request to the first gateway server 20A based on the global address information acquired by the other-party address information acquiring part 17 as described later.

A communication establishment request is information representing a request for establishment of a communication session (e.g., setting of a communication path) between the first mobile communication terminal 10A and another mobile communication terminal (in this exemplary embodiment, the second mobile communication terminal 10B) through the first gateway server 20A and the second gateway server 20B.

The speech communication processing part 14 executes a process (a speech communication process) for performing speech communication with a mobile communication terminal specified by a telephone number inputted by the user via the input device. The speech communication processing part 14 causes the storage device to store the inputted telephone number as an other-party telephone number. The speech communication processing part 14 erases the other-party telephone number stored in the storage device when the speech communication ends (execution of the speech communication process is completed).

The talk information acquiring part 15 acquires the telephone number of its own terminal (i.e., the first mobile communication terminal 10A) and the telephone number (an other-party telephone number) of an other-party terminal (possessed by an other-party terminal) with which its own terminal is performing speech communication at the current moment.

The message communication processing part 16 receives a short message transmitted by another mobile communication terminal (in this exemplary embodiment, the second mobile communication terminal 10B) via the message relay server 30. In a case that the received short message does not include global address information, the message communication processing part 16 outputs information representing reception of a short message via the output device.

Further, in a case that a message is inputted by the user via the input device, the message communication processing part 16 transmits the inputted message as a short message to another mobile communication terminal (in this exemplary embodiment, the second mobile communication terminal 10B) via the message relay server 30.

Further, in response to an instruction from the address information transmitting part 18, the message communication processing part 16 transmits a short message to another mobile communication terminal (in this exemplary embodiment, the second mobile communication terminal 10B) via the message relay server 30.

In a case that a short message received by the message communication processing part 16 includes global address information, the other-party address information acquiring part 17 acquires the global address information as other-party global address information.

In a case that global address information is acquired by the gateway communication processing part 13, the address information transmitting part 18 outputs to the message communication processing part 16, an instruction to transmit as a short message, a message whose destination (transmission destination) is an other-party telephone number acquired by the talk information acquiring part 15 and whose transmission source is the telephone number of its own terminal acquired by the talk information acquiring part 15 and which includes the acquired global address information.

### (Operation)

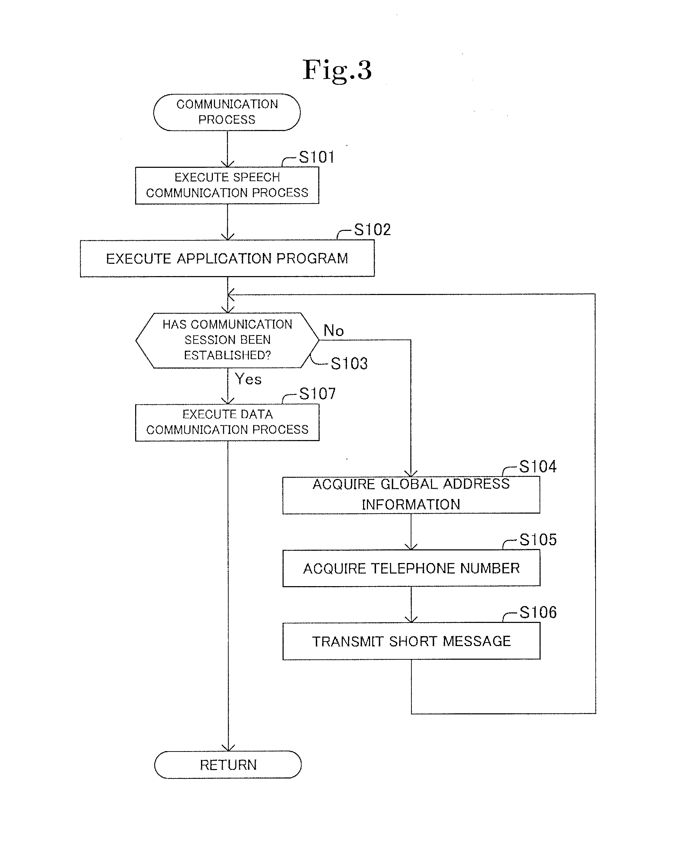

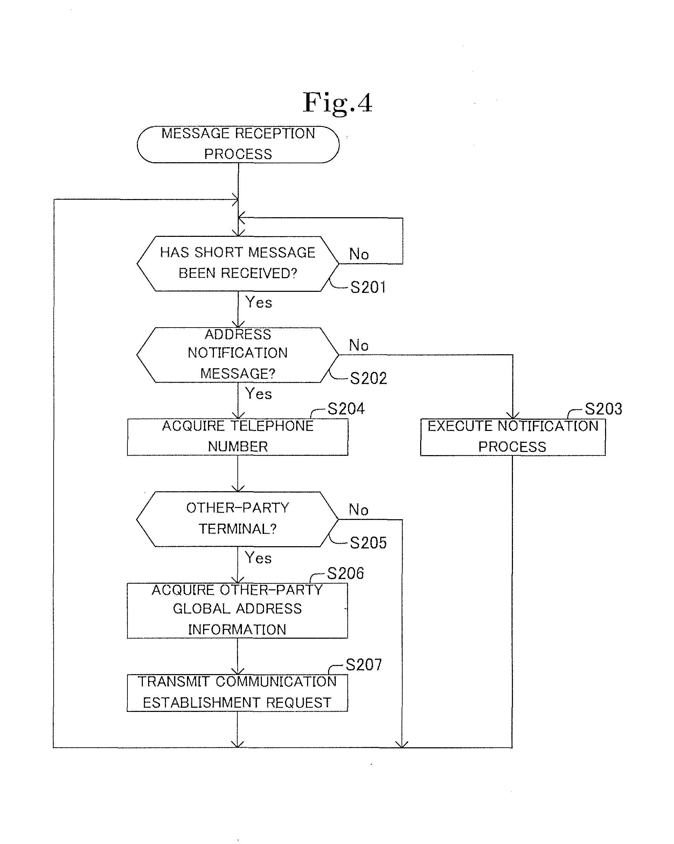

Next, the operation of the mobile communication system 1 configured as described above will be illustrated with reference to Figs. 3 and 4.
At first, the user of the first mobile communication terminal 10A inputs the telephone number of a talk destination and information representing a request for start of talk via the input device. The first mobile communication terminal 10A may be configured to previously store an address book in which telephone numbers are associated with names and accept a telephone number associated with a name selected by the user as a talk destination telephone number.

It is assumed that the user has inputted a telephone number possessed by the second mobile communication terminal 10B. Thus, the first mobile communication terminal 10A starts execution of a communication processing program shown by a flowchart in Fig. 3. In the case of starting speech communication with the first mobile communication terminal 10A, the second mobile communication terminal 10B also starts execution of this communication processing program in the same manner as the first mobile communication terminal 10A.

The first mobile communication terminal 10A executes a process (a speech communication process) for performing speech communication with the second mobile communication terminal 10B (step S101).

Next, the first mobile communication terminal 10A executes the application program stored in the storage device (step S102). In this exemplary embodiment, the first mobile communication terminal 10A is configured to, in a case that information on an instruction to start execution of the application program is inputted by the user, execute the application program. The first mobile communication terminal 10A may be configured to automatically execute the application program in a case that execution of the speech communication process is started.

Then, the application program starts a communication process with a mobile communication terminal (herein, the second mobile communication terminal 10B) that is the other party of speech communication, the first mobile communication terminal 10A judges whether a communication session for performing data communication with the mobile communication terminal (herein, the second mobile communication terminal 10B) that is the other party of the speech communication has already been established (step S103).

In a case that the communication session has not been established yet, the first mobile communication terminal 10A judges "No" and proceeds to step S104. Then, the first mobile communication terminal 10A transmits an address information acquisition request to the gateway server 20A. Consequently, the first mobile communication terminal 10A receives (acquires) global address information (its own global address information) from the first gateway server 20A.

For example, the first mobile communication terminal 10A may acquire the global address information by executing the same processes as those at steps S21 to S24 disclosed in Fig. 13 of Patent Document 1. In this case, it is preferred that the gateway servers 20A and 20B each have the same function as a proxy device 5 disclosed in Patent Document 1.

Further, the first mobile communication terminal 10A may acquire the global address information by using a technique called UPnP NAT Traversal in general. In this case, it is preferred that each of the gateway servers 20A and 20B is a data exchanger having this function and called a router in general.

Next, the first mobile communication terminal 10A acquires its own telephone number (the telephone number of the first mobile communication terminal 10A) and the telephone number (an other-party telephone number) of an other-party terminal (herein, the second mobile communication terminal 10B) with which the first mobile communication terminal 10A is performing speech communication at the current moment (step S 105).

Then, the first mobile communication terminal 10A transmits a message whose destination (transmission destination) is the acquired other-party telephone number and whose transmission source is the acquired number of its own telephone and which includes the acquired global address information, as a short message to the message relay server 30 (step S106). The message relay server 30 receives the short message from the first mobile communication terminal 10A, and transmits (transfers) the received short message to a terminal (herein, the second mobile communication terminal 10B) specified by the other-party telephone number as the transmission destination.

Next, the first mobile communication terminal 10A stands by for a previously set standby time. After that, the first mobile communication terminal 10A returns to step S103 and, in a case that the communication session has not been established, repeatedly executes the processes at steps S 103 to step S106.

On the other hand, at the time of startup of the second mobile communication terminal 10B, the second mobile communication terminal 10B starts execution of a message reception processing program shown by a flowchart in Fig. 4. In the same manner as the second mobile communication terminal 10B, the first mobile communication terminal 10A also starts execution of this message reception processing program at the time of startup of the first mobile communication terminal 10A.

The second mobile communication terminal 10B stands by until receiving a short message (step S201). At this moment, the second mobile communication terminal 10B receives a short message as an address notification message, from the first mobile communication terminal 10A. An address notification message is a message including global address information transmitted at step S106 of Fig. 3.

Upon reception of a short message, the second mobile communication terminal 10B judges "Yes" at step S201, and proceeds to step S202 to judge whether the received short message is an address notification message.

At this moment, the second mobile communication terminal 10B has already received the address notification message, and therefore, the second mobile communication terminal 10B judges "Yes" and proceeds to step S204. Then, the second mobile communication terminal 10B acquires its own telephone number (the telephone number of the second mobile communication terminal 10B), and the telephone number (the other-party telephone number) of an other-party terminal (herein, the first mobile communication terminal 10A) with which the second mobile communication terminal 10B is performing speech communication at the current moment.

Next, the second mobile communication terminal 10B judges whether the transmission source of the address notification message is the (telephone number of the) other-party terminal that the second mobile communication terminal 10B is performing speech communication at the current moment (step S205). According to the abovementioned assumption, the transmission source of the address notification message is the other-party terminal that the second mobile communication terminal 10B is performing speech communication at the current moment.

Therefore, the second mobile communication terminal 10B judges "Yes" and proceeds to step S206 to acquire the global address information included in the address notification message. Next, the second mobile communication terminal 10B transmits a communication establishment request including its own global address information acquired at step S104 of Fig. 3 and other-party global address information, to the second gateway server 20B (step S207).

A communication establishment request is information representing a request for establishment of a communication session (e.g., setting of a communication path) between the first mobile communication terminal 10A and the second mobile communication terminal 10B through the first gateway server 20A and the second gateway server 20B.

For example, in a case that each of the mobile communication terminals 10A and 10B has acquired global address information by using a method disclosed in Patent Document 1, the mobile communication system 1 sets a communication path by executing the same processes those of steps S31 to S37 disclosed in Fig. 13 of Patent Document 1. Moreover, in a case that the mobile communication terminal 10A or 10B has acquired global address information by using a technique called UPnP NAT Traversal, the mobile communication system 1 does not execute any special process on the gateway server 20A or 20B.

In a case that having not acquired its own global address information yet, the second mobile communication terminal 10B executes the same process as that on step S 104 of Fig. 3 to acquire its own global address information from the second gateway server 20B, and thereafter, executes a process at step S207.

After that, the second mobile communication terminal 10B returns to step S201, and repeatedly executes the processes at steps S201 to S207.

In a case that the transmission source of the address notification message is not the other-party terminal that the second mobile communication terminal 10B is performing speech communication at the current moment, the second mobile communication terminal 10B judges "No" at step S205, and returns to step S201 without executing the processes at steps S206 and S207.

Further, in the case of having received a short message other than an address notification message, the second mobile communication terminal 10B judges "No" at step S202 and proceeds to step S203. Then, the second mobile communication terminal 10B outputs information representing reception of the short message, via the output device (i.e., executes a notification process). After that, the second mobile communication terminal 10B returns to step S201.

Upon reception of a communication establishment request, the first gateway server 20A and the second gateway server 20B establish a communication session between the first mobile communication terminal 10A and the second mobile communication terminal 10B through the first gateway server 20A and the second gateway server 20B.

As a result, each of the mobile communication terminals 10A and 10B judges "Yes" at step S 103 of Fig. 3, and proceeds to step S107 to execute a process (a data communication process) for performing data communication with an other-party terminal. Consequently, the first mobile communication terminal 10A performs data communication through the first gateway server 20A and the second gateway server 20B, with the second mobile communication terminal 10B.

As described above, the mobile communication system 1 according to the first exemplary embodiment of the present invention makes it possible to reduce the cost for structuring and operating a mobile communication system, as compared with when a matching server is provided.

Further, in the mobile communication system 1 according to the first exemplary embodiment, when performing speech communication for talk with the second mobile communication terminal 10B, the first mobile communication terminal 10A transmits a message including global address information to the second mobile communication terminal 10B.
According to this, it is possible to save the user time and effort to input information for specifying a mobile communication terminal which becomes the other party of communication (data communication) via an IP network. Moreover, it is possible to speedily start data communication with the second mobile communication terminal 10B as the other party of speech communication for talking.

### <Second Exemplary Embodiment>

Next, a mobile communication system according to a second exemplary embodiment of the present invention will be described. The mobile communication system according to the second exemplary embodiment is different from the mobile communication system according to the first exemplary embodiment in that an e-mail is used as a message including global address information instead of a short message. Therefore, a description will be made below focusing on the different point.

The message relay server 30 in the second exemplary embodiment relays transmission and reception of a message as e-mails between the first mobile communication terminal 10A and the second mobile communication terminal 10B.

To be specific, the message relay server 30 receives information including a message and an e-mail address as the destination of the message, and transits (transfers) the received message to the mobile communication terminal 10A or 10B specified by the received e-mail address. That is to say, in this exemplary embodiment, a message is a message transmitted as an e-mail.

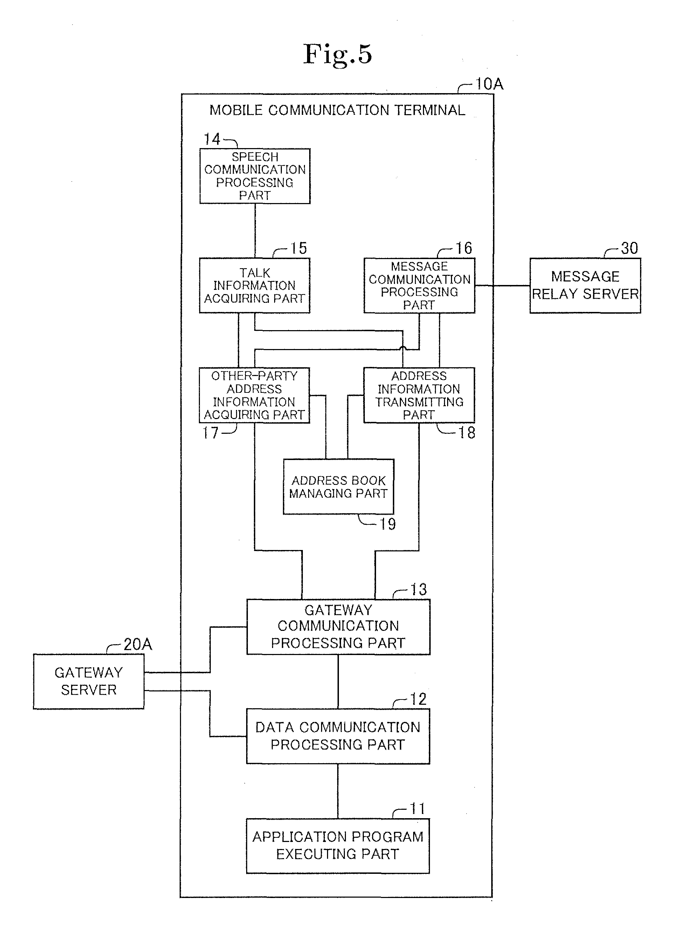

As shown in Fig. 5, a function of the first mobile communication terminal 10A according to the second exemplary embodiment includes an address book managing part 19, in addition to the same functions as those of the first mobile communication terminal 10A according to the first exemplary embodiment. The address book managing part 19 previously stores an address book in which a telephone number, an e-mail address, and a name are associated.

Further, the message communication processing part 16 in the second exemplary embodiment receives an e-mail transmitted by another mobile communication terminal (in this exemplary embodiment, the second mobile communication terminal 10B), via the message relay server 30. In a case that the received e-mail does not include global address information, the message communication processing part 16 outputs information representing reception of the e-mail via the output device.

Further, in a case that a message is inputted by the user via the input device, the message communication processing part 16 transmits the inputted message as an e-mail to another mobile communication terminal (in this exemplary embodiment, the second mobile communication terminal 10B) via the message relay server 30.

Further, in response to an instruction from the address information transmitting part 18, the message communication processing part 16 transmits an e-mail to another mobile communication terminal (in this exemplary embodiment, the second mobile communication terminal 10B) via the message relay server 30.

Further, in a case that global address information is acquired by the gateway communication processing part 13, the address information transmitting part 18 in the second exemplary embodiment acquires an e-mail address stored in the address book managing part 19 in association with an other-party telephone number acquired by the talk information acquiring part 15.

Then, the address information transmitting part 18 outputs an instruction to transmit a message whose destination (transmission destination) is the acquired e-mail address and whose transmission source is its own e-mail address stored in the storage device and which includes the acquired global address information, as an e-mail to the message communication processing part 16.

### (Operation)

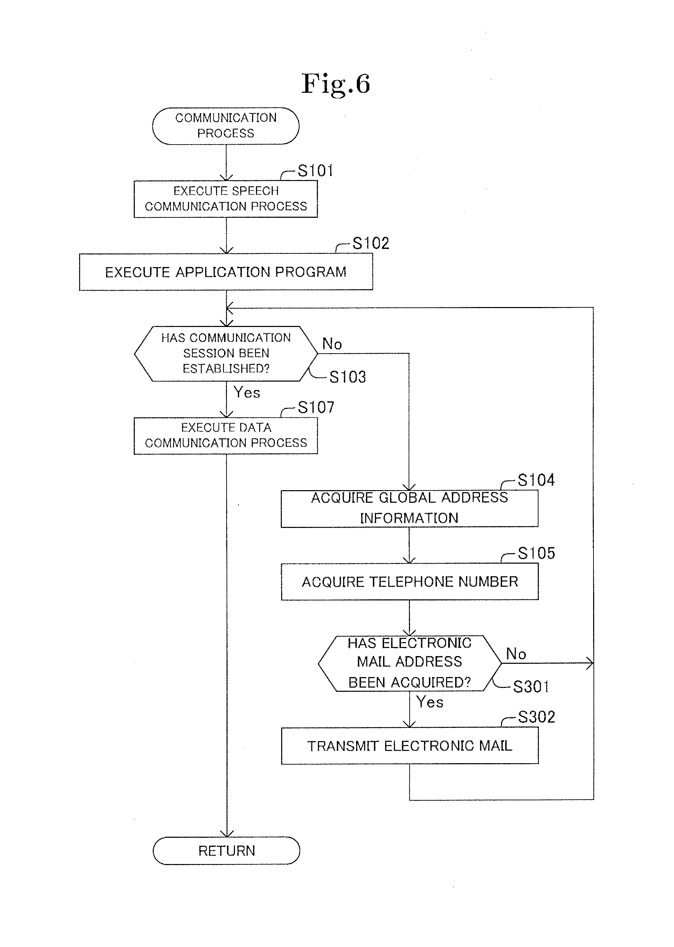

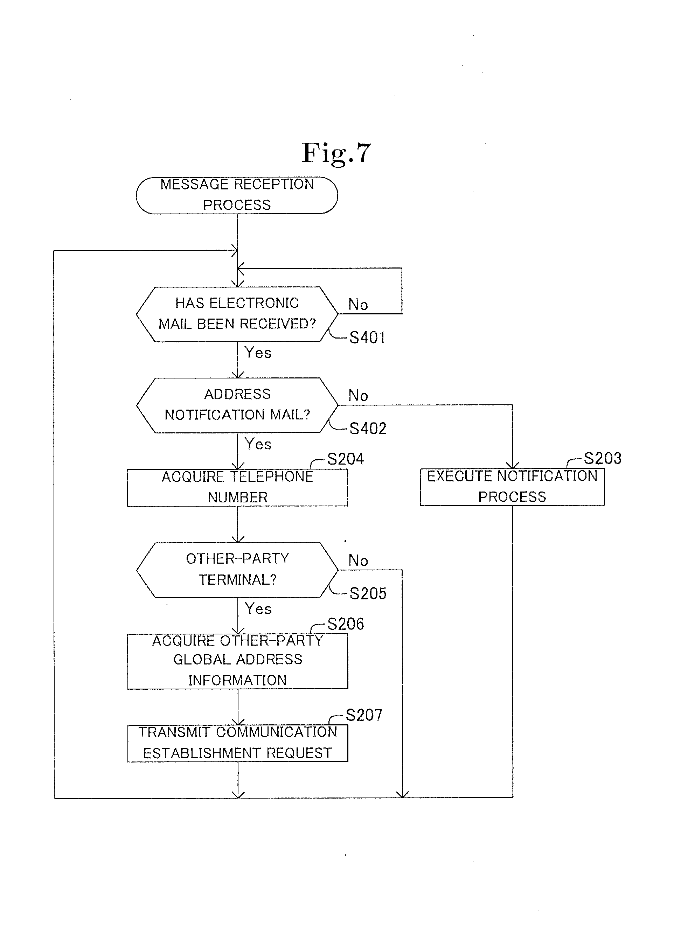

Next, the operation of the mobile communication system 1 configured as described above will be illustrated with reference to Figs. 6 and 7.
The mobile communication terminals 10A and 10B each execute a communication processing program shown in Fig. 6, instead of the communication processing program shown in Fig. 3. The communication processing program shown in Fig. 6 is a program in which the process at step S106 of the communication processing program shown in Fig. 3 is replaced with processes at steps S301 and S302.

The first mobile communication terminal 10A acquires its own telephone number and the telephone number of an other-party terminal at step S105 of Fig. 6, and thereafter proceeds to step S301. Then, the first mobile communication terminal 10A acquires an e-mail address (an other-party address) stored in the storage device in association with the acquired telephone number of the other-party terminal.

Then, the first mobile communication terminal 10A judges whether the e-mail address has been acquired. In a case that the e-mail address has been acquired, the first mobile communication terminal 10A judges "Yes" and proceeds to step S302.

Next, the first mobile communication terminal 10A transmits, as an e-mail (an address notification mail), a message whose transmission destination is the acquired other-party address and whose transmission source is its own e-mail address and which includes the global address information acquired at step S104, the acquired other-party telephone number as the telephone number of the transmission destination and its own telephone number as the telephone number of the transmission source. After that, the first mobile communication terminal 10A returns to step S103.

In a case that the e-mail address has not been acquired at step S301, the first mobile communication terminal 10A judges "No" and returns to step S103 without executing the process at step S302.

On the other hand, the mobile communication terminals 10A and 10B each execute a message reception processing program shown in Fig. 7, instead of the message reception processing program shown in Fig. 4. The message reception processing program shown in Fig. 7 is a program in which the process at step S201 of the message reception processing program shown in Fig. 4 is replaced with a process at step S401 and the process at step S202 of the message reception processing program shown in Fig. 4 is replaced with a process at step S404.

The second mobile communication terminal 10B stands by until receiving an e-mail (step S401). Then, upon reception of an e-mail as an address notification mail from the first mobile communication terminal 10A, the second mobile communication terminal 10B judges "Yes" at step S401, and proceeds to step S402 to judge whether the received e-mail is an address notification mail.

In this case, the second mobile communication terminal 10B judges "Yes" and proceeds to step S204. Then, the second mobile communication terminal 10B acquires its own telephone number (the telephone number of the mobile communication terminal 10B) and the telephone number (an other-party telephone number) of an other-party terminal (herein, the first mobile communication terminal 10A) with which the mobile communication terminal 10B is performing speech communication at the current moment.

Next, the second mobile communication terminal 10B judges whether the telephone number of the transmission source included in the address notification mail is the (telephone number of the) other-party terminal that the mobile communication terminal 10B is performing speech communication at the current moment (step S205). After that, the second mobile communication terminal 10B executes the same process as in the first exemplary embodiment.

The second mobile communication terminal 10B may be configured to judge "Yes" at step S205 when the telephone number of the transmission source included in the address notification mail is the (telephone number of the) other-party terminal that the second mobile communication terminal 10B is performing speech communication at the current moment and an e-mail address stored in the storage device in association with the telephone number of the transmission source included in the address notification mail is the e-mail address of the transmission source of the address notification mail.

As described above, the mobile communication system 1 according to the second exemplary embodiment can produce the same actions and effects as the mobile communication system 1 according to the first exemplary embodiment.

### <Third Exemplary Embodiment>

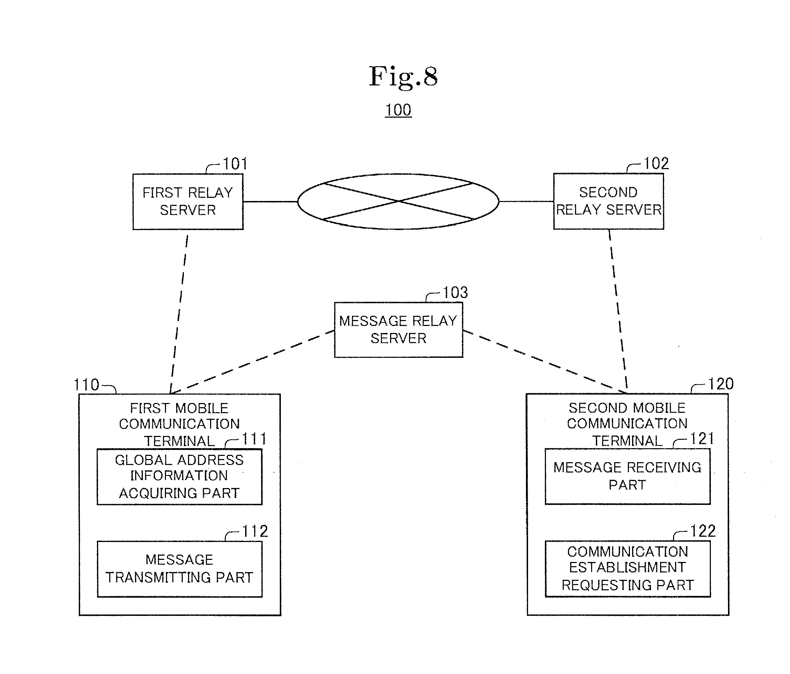

Next, a mobile communication system according to a third exemplary embodiment of the present invention will be described with reference to Fig. 8.
A mobile communication system 100 according to the third exemplary embodiment includes:
a first relay server 101 having a global IP address;
a second relay server 102 having a global IP address and connected with the first relay server 101 via a global IP network so as to be capable of communicating;
a first mobile communication terminal 110 connected with the first relay server 101 so as to be capable of communicating;
a second mobile communication terminal 120 connected with the second relay server 102 so as to be capable of communicating; and
a message relay server 103 relaying transmission and reception of a message between the first mobile communication terminal 110 and the second mobile communication terminal 120.

The first mobile communication terminal 110 includes:
a global address information acquiring part (a global address information acquiring means) 111 for acquiring global address information which is information including the global IP address and which is information associated with the first mobile communication terminal 110, from the first relay server 101; and
a message transmitting part (a message transmitting means) 112 for transmitting the message including the acquired global address information to the second mobile communication terminal 120 via the message relay server 103.

In addition, the second mobile communication terminal 120 includes:
a message receiving part (a message receiving means) 121 for receiving the message transmitted by the first mobile communication terminal 110; and
a communication establishment requesting part (a communication establishment requesting means) 122 for, based on the global address information included in the received message, requesting the second relay server 102 to establish a communication session between the first mobile communication terminal 110 and the second mobile communication terminal 120 through the first relay server 101 and the second relay server 102.

A message relay server that relays transmission and reception of a short message or an e-mail is usually included in a mobile communication system. Therefore, by configuring the mobile communication system 100 as described above, it is possible to reduce the cost for structuring and operating the mobile communication system 100, compared with when a matching server is provided.

Although the present invention has been described above with reference to the exemplary embodiment, the present invention is not limited to the exemplary embodiments described above. The configurations and details of the present invention can be altered in various manners that can be understood by those skilled in the art within the scope of the present invention.

Each of the functions of the mobile communication system 1 in the respective exemplary embodiments described above is realized by execution of the program (software) by the CPU, but may be realized by hardware such as a circuit.

Further, the program in each of the exemplary embodiments described above is stored in the storage device, but may be stored in a computer-readable recording medium. For example, the recording medium is a portable medium such as a flexible disk, an optical disk, a magneto-optical disk and a semiconductor memory.

Further, as a modified example of the exemplary embodiment, any combination of the exemplary embodiments and modified examples may be employed.

### [Supplementary Notes]

The whole or part of the exemplary embodiments disclosed above can be described as, but not limited to, the following supplementary notes.

### (Supplementary Note 1)

A mobile communication system, comprising:
a first relay server having a global IP address;
a second relay server having a global IP address and connected with the first relay server via a global IP network so as to be capable of communicating;
a first mobile communication terminal connected with the first relay server so as to be capable of communicating;
a second mobile communication terminal connected with the second relay server so as to be capable of communicating; and
a message relay server relaying transmission and reception of a message between the first mobile communication terminal and the second mobile communication terminal,
wherein the first mobile communication terminal includes:
   a global address information acquiring means for acquiring global address information which is information including the global IP address and which is information associated with the first mobile communication terminal, from the first relay server; and
   a message transmitting means for transmitting the message including the acquired global address information to the second mobile communication terminal via the message relay server; and
wherein the second mobile communication terminal includes:
   a message receiving means for receiving the message transmitted by the first mobile communication terminal; and
   a communication establishment requesting means for, based on the global address information included in the received message, requesting the second relay server to establish a communication session between the first mobile communication terminal and the second mobile communication terminal through the first relay server and the second relay server.

The message relay server that relays transmission and reception of a short message or an e-mail is usually included in the mobile communication system. Therefore, by configuring the mobile communication system as described above, it is possible to reduce the cost for structuring and operating the mobile communication system, compared with when providing a matching server.

### (Supplementary Note 2)

The mobile communication system according to Supplementary Note 1, wherein the message is a message transmitted as a short message or an e-mail.

### (Supplementary Note 3)

The mobile communication system according to Supplementary Note 1 or 2, wherein the message transmitting means is configured to, when speech communication for talk with the second mobile communication terminal is performed, transmit the message including the acquired global address information to the second mobile communication terminal.

According to this, it is possible to save the user time to input information for specifying a mobile communication terminal which becomes the other party of communication via the IP network (data communication). Moreover, it is possible to speedily start data communication with the mobile communication terminal that is the other party of the communication.

### (Supplementary Note 4)

The mobile communication system according to Supplementary Note 3, wherein the message transmitting means is configured to, when speech communication for talk with the second mobile communication terminal is performed, acquire a telephone number possessed by the second mobile communication terminal and transmit the message as a short message whose transmission destination is the acquired telephone number.

### (Supplementary Note 5)

The mobile communication system according to Supplementary Note 3, wherein the message transmitting means is configured to, when speech communication for talk with the second mobile communication terminal is performed, acquire a telephone number possessed by the second mobile communication terminal, acquire an e-mail address stored in association with the acquired telephone number, and transmit the message as an e-mail whose transmission destination is the acquired e-mail address.

### (Supplementary Note 6)

The mobile communication system according to any of Supplementary Notes 1 to 5, wherein the communication establishment requesting means is configured to, when speech communication for talk with the first mobile communication terminal is performed, request the second relay server to establish the communication session.

### (Supplementary Note 7)

The mobile communication system according to any of Supplementary Notes 1 to 6, wherein the global address information includes a global IP address and a port number.

### (Supplementary Note 8)

A mobile communication method applied to a mobile communication system which includes: a first relay server having a global IP address; a second relay server having a global IP address and connected with the first relay server via a global IP network so as to be capable of communicating; a first mobile communication terminal connected with the first relay server so as to be capable of communicating; a second mobile communication terminal connected with the second relay server so as to be capable of communicating; and a message relay server relaying transmission and reception of a message between the first mobile communication terminal and the second mobile communication terminal, the mobile communication method comprising:
by the first mobile communication terminal, acquiring global address information which is information including the global IP address and which is information associated with the first mobile communication terminal, from the first relay server;
by the first mobile communication terminal, transmitting the message including the acquired global address information to the second mobile communication terminal via the message relay server;
by the second mobile communication terminal, receiving the message transmitted by the first mobile communication terminal; and
by the second mobile communication terminal, requesting the second relay server to establish a communication session between the first mobile communication terminal and the second mobile communication terminal through the first relay server and the second relay server, based on the global address information included in the received message.

### (Supplementary Note 9)

The mobile communication method according to Supplementary Note 8, wherein the message is a message transmitted as a short message or an e-mail.

### (Supplementary Note 10)

The mobile communication method according to Supplementary Note 8 or 9, comprising:
by the first mobile communication terminal, transmitting the message including the acquired global address information to the second mobile communication terminal, when speech communication for talk with the second mobile communication terminal is performed.

### (Supplementary Note 11)

A mobile communication terminal connected with a relay server having a global IP address so as to be capable of communicating, the mobile communication terminal comprising:
a global address information acquiring means for acquiring global address information which is information including the global IP address and which is information associated with the mobile communication terminal, from the relay server; and
a message transmitting means for transmitting a message including the acquired global address information to another mobile communication terminal via a message relay server.

### (Supplementary Note 12)

The mobile communication terminal according to Supplementary Note 11, wherein the message is a message transmitted as a short message or an e-mail.

### (Supplementary Note 13)

The mobile communication terminal according to Supplementary Note 11 or 12, wherein the message transmitting means is configured to, when speech communication for talk with the other mobile communication terminal is performed, transmit the message including the acquired global address information to the other mobile communication terminal.

### (Supplementary Note 14)

A mobile communication program, comprising instructions for causing a mobile communication terminal connected with a relay server having a global IP address so as to be capable of communicating, to realize:
a global address information acquiring means for acquiring global address information which is information including the global IP address and which is information associated with the mobile communication terminal, from the relay server; and
a message transmitting means for transmitting a message including the acquired global address information to another mobile communication terminal via a message relay server.

### (Supplementary Note 15)

The mobile communication program according to Supplementary Note 14, wherein the message is a message transmitted as a short message or an e-mail.

### (Supplementary Note 16)

The mobile communication program according to Supplementary Note 14 or 15, wherein the message transmitting means is configured to, when the mobile communication terminal is performing speech communication for talk with the other mobile communication terminal, transmit the message including the acquired global address information to the other mobile communication terminal.

### (Supplementary Note 17)

A mobile communication terminal connected with a relay server having a global IP address so as to be capable of communicating, the mobile communication terminal comprising:
a message receiving means for receiving a message which is transmitted by another mobile communication terminal and which includes global address information that is information including a global IP address, via a message relay server; and
a communication establishment requesting means for, based on the global address information included in the received message, requesting the relay server to establish a communication session with the other mobile communication terminal through the relay server.

### (Supplementary Note 18)

The mobile communication terminal according to Supplementary Note 17, wherein the message is a message transmitted as a short message or an e-mail.

### (Supplementary Note 19)

A mobile communication program, comprising instructions for causing a mobile communication terminal connected with a relay server having a global IP address so as to be capable of communicating, to realize:
a message receiving means for receiving a message which is transmitted by another mobile communication terminal and which includes global address information that is information including a global IP address, via a message relay server; and
a communication establishment requesting means for, based on the global address information included in the received message, requesting the relay server to establish a communication session between the mobile communication terminal and the other mobile communication terminal through the relay server.

### (Supplementary Note 20)

The mobile communication program according to Supplementary Note 19, wherein the message is a message transmitted as a short message or an e-mail.

The present invention is based upon and claims the benefit of priority from Japanese patent application No. 2010-143457, filed on June 24, 2010, the disclosure of which is incorporated herein in its entirety by reference.

### INDUSTRIAL APPLICABILITY

The present invention can be applied to, for example, a mobile communication system in which data communication is performed between mobile communication terminals.

### DESCRIPTION OF REFERENCE NUMERALS

- 1: mobile communication system
- 10A: first mobile communication terminal
- 10B: second mobile communication terminal
- 11: application program executing part
- 12: data communication processing part
- 13: gateway communication processing part
- 14: speech communication processing part
- 15: talk information acquiring part
- 16: message communication professing part
- 17: other-party address information acquiring part
- 18: address information transmitting part
- 19: address book managing part
- 20A: first gateway server
- 20B: second gateway server
- 30: message relay server
- 100: mobile communication system
- 101: first relay server
- 102: second relay server
- 103: message relay server
- 110: first mobile communication terminal
- 111: global address information acquiring part
- 112: message transmitting part
- 120: second mobile communication terminal
- 121: message receiving part
- 122: communication establishment requesting part
- NW: communication network

## Claims

1. A mobile communication system, comprising:
a first relay server having a global IP address;
a second relay server having a global IP address and connected with the first relay server via a global IP network so as to be capable of communicating;
a first mobile communication terminal connected with the first relay server so as to be capable of communicating;
a second mobile communication terminal connected with the second relay server so as to be capable of communicating; and
a message relay server relaying transmission and reception of a message between the first mobile communication terminal and the second mobile communication terminal,
wherein the first mobile communication terminal includes:
a global address information acquiring means for acquiring global address information which is information including the global IP address and which is information associated with the first mobile communication terminal, from the first relay server; and
a message transmitting means for transmitting the message including the acquired global address information to the second mobile communication terminal via the message relay server; and
wherein the second mobile communication terminal includes:
a message receiving means for receiving the message transmitted by the first mobile communication terminal; and
a communication establishment requesting means for, based on the global address information included in the received message, requesting the second relay server to establish a communication session between the first mobile communication terminal and the second mobile communication terminal through the first relay server and the second relay server.

2. The mobile communication system according to Claim 1, wherein the message is a message transmitted as a short message or an e-mail.

3. The mobile communication system according to Claim 1 or 2, wherein the message transmitting means is configured to, when speech communication for talk with the second mobile communication terminal is performed, transmit the message including the acquired global address information to the second mobile communication terminal.

4. The mobile communication system according to Claim 3, wherein the message transmitting means is configured to, when speech communication for talk with the second mobile communication terminal is performed, acquire a telephone number possessed by the second mobile communication terminal and transmit the message as a short message whose transmission destination is the acquired telephone number.

5. The mobile communication system according to Claim 3, wherein the message transmitting means is configured to, when speech communication for talk with the second mobile communication terminal is performed, acquire a telephone number possessed by the second mobile communication terminal, acquire an e-mail address stored in association with the acquired telephone number, and transmit the message as an e-mail whose transmission destination is the acquired e-mail address.

6. A mobile communication method applied to a mobile communication system which includes: a first relay server having a global IP address; a second relay server having a global IP address and connected with the first relay server via a global IP network so as to be capable of communicating; a first mobile communication terminal connected with the first relay server so as to be capable of communicating; a second mobile communication terminal connected with the second relay server so as to be capable of communicating; and a message relay server relaying transmission and reception of a message between the first mobile communication terminal and the second mobile communication terminal, the mobile communication method comprising:
by the first mobile communication terminal, acquiring global address information which is information including the global IP address and which is information associated with the first mobile communication terminal, from the first relay server;
by the first mobile communication terminal, transmitting the message including the acquired global address information to the second mobile communication terminal via the message relay server;
by the second mobile communication terminal, receiving the message transmitted by the first mobile communication terminal; and
by the second mobile communication terminal, requesting the second relay server to establish a communication session between the first mobile communication terminal and the second mobile communication terminal through the first relay server and the second relay server, based on the global address information included in the received message.

7. A mobile communication terminal connected with a relay server having a global IP address so as to be capable of communicating, the mobile communication terminal comprising:
a global address information acquiring means for acquiring global address information which is information including the global IP address and which is information associated with the mobile communication terminal, from the relay server; and
a message transmitting means for transmitting a message including the acquired global address information to another mobile communication terminal via a message relay server.

8. A mobile communication program, comprising instructions for causing a mobile communication terminal connected with a relay server having a global IP address so as to be capable of communicating, to realize:
a global address information acquiring means for acquiring global address information which is information including the global IP address and which is information associated with the mobile communication terminal, from the relay server; and
a message transmitting means for transmitting a message including the acquired global address information to another mobile communication terminal via a message relay server.

9. A mobile communication terminal connected with a relay server having a global IP address so as to be capable of communicating, the mobile communication terminal comprising:
a message receiving means for receiving a message which is transmitted by another mobile communication terminal and which includes global address information as information including a global IP address, via a message relay server; and
a communication establishment requesting means for, based on the global address information included in the received message, requesting the relay server to establish a communication session with the other mobile communication terminal through the relay server.

10. A mobile communication program, comprising instructions for causing a mobile communication terminal connected with a relay server having a global IP address so as to be capable of communicating, to realize:
a message receiving means for receiving a message which is transmitted by another mobile communication terminal and which includes global address information that is information including a global IP address, via a message relay server; and
a communication establishment requesting means for, based on the global address information included in the received message, requesting the relay server to establish a communication session between the mobile communication terminal and the other mobile communication terminal through the relay server.
